# EUROPÄISCHE PATENTANMELDUNG

(11) **EP 1 099 585 A2**
(43) Veröffentlichungstag der Anmeldung: **16.05.2001**
(21) Anmeldenummer: 00123979.7
(22) Anmeldetag: 03.11.2000
(51) Int. Cl.: B60J 7/08

(54) **Vorrichtung zur Abdeckung eines Behälters durch eine Abdeckplane**

(30) Priorität: 09.11.1999 DE 19953674
(71) Anmelder: Schmitz Gotha Fahrzeugwerke GmbH, 99867 Gotha (DE)
(72) Erfinder: Koch, Josef, 89081 Ulm (DE)
(74) Vertreter: Weber, Gerhard

(57) **Zusammenfassung**

Für die automatische Abdeckung eines Behälters, insbesondere eines Transportbehälters eines Lastfahrzeugs, wird eine Vorrichtung vorgeschlagen, bei welcher eine Welle (WE), auf welche eine Abdeckplane (PL) aufgewickelt ist, mittels eines flexiblen Zugelements unter Abwicklung der Plane (PL) von einer Behälterlängsseite zur gegenüberliegenden verlagert wird. Zur Niederhaltung der Querkanten der Abdeckplane (PL) wird der Einsatz einer Klettverschlußverbindung (KV) vorgeschlagen.

## Beschreibung

Die Erfindung betrifft eine Vorrichtung zur Abdeckung eines Behälters durch eine Abdeckplane.

Bei auf Fahrzeugen angeordneten Behältern muß dafür Sorge getragen werden, daß im Behälter vorliegendes Ladegut während der Fahrt nicht aus diesem entweicht, z. B. durch Herausschleudern bei Erschütterungen und/oder durch Mitnahme durch den Fahrtwind. Hierzu kann die nach oben weisende Behälteröffnung durch eine Plane abgedeckt werden.

Zur Automatisierung eines solchen Abdeckvorgangs bzw. der Entfernung der Abdeckplane über der Behälteröffnung ist aus der DE 28 22 451 C2 eine Anordnung zur Abdeckung einer Fahrzeug-Schnitzelkiste bekannt, welche eine Welle mit einer aufgerollten Abdeckplane, die an einer Längsseite des Behälters befestigt ist, enthält. Die Welle ist am Ende von zwei an gegenüberliegenden Stirnseiten des Behälters angeordneten hydraulisch betätigbaren Schwenkhebeln befestigt und durch Verschwenkung der Schwenkhebel zur gegenüberliegenden Längsseite verlängerbar. Bei der Verlagerung wird die Abdeckplane von der Welle abgerollt und legt sich über das Ladegut. Zur Niederhaltung der sich zwischen den Behälterlängsseiten erstreckenden Querkanten der abgerollten Abdeckplane kann beispielsweise eine in der Endlage der Welle betätigte Klappe oder ein elastisches Band vorgesehen sein.

Der vorliegenden Erfindung liegt die Aufgabe zugrunde, eine Vorrichtung der eingangs genannten Art anzugeben, welche auf vorteilhafte Weise eine automatische Abdeckung und Freilegung einer Behälteröffnung ermöglicht.

Die Erfindung ist im Patentanspruch 1 beschrieben. Die abhängigen Ansprüche enthalten vorteilhafte Ausgestaltungen und Weiterbildungen der Erfindung.

Die erfindungsgemäße Verlagerung der Welle, welche als Rollenkern der Abdeckplane dient, durch Einwirkung einer Zugelementanordnung zwischen den Längsseiten des Behälters an einer von dessen Stirnseiten ermöglicht eine einfache und kostengünstige Realisierung, welche zudem hinsichtlich eines Überstands des Ladeguts über die Ebene der Behälteröffnung besonders flexibel ist. Die Anordnung des motorischen Antriebs ist für eine Zugelementanordnung mit einem oder mehreren flexiblem Zugelementen vorteilhafterweise weitgehend beliebig, so daß ein solcher Antrieb bzw. bei mehreren getrennt angetriebenen Zugelementen mehrere solche Antriebe weitgehend beliebig positioniert werden können und andere Funktionen, beispielsweise die Verschwenkbarkeit einer heckseitigen Behälterstirnplatte zur Ausgabe von Ladegut nicht behindern.

Eine motorisch angetriebene Zugelementanordnung kann an beiden gegenüberliegenden Stirnseiten des Behälters vorgesehen sein. Bevorzugt ist aber eine Vorrichtung mit einer motorisch angetriebenen Zugelementanordnung an nur einer Stirnseite, so daß die andere Stirnseite konstruktiv noch weniger eingeschränkt ist. Insbesondere bei der bevorzugten Anwendung an einem Fahrzeug-Muldenbehälter kann die motorisch angetriebene Zugelementanordnung an der dem Führerhaus zugewandten Stirnseite des Behälters angeordnet sein und damit sowohl gegen externe Einwirkungen in einer besonders geschützten Position liegen als auch selbst kein Verletzungspotential nach außen bergen.

Die gegenüberliegende Behälterstirnseite am Fahrzeugheck kann dann nach hinten oben wegschwenkbar sein, um die Rückseite des Behälters, der vorzugsweise als Kippmulde ausgeführt ist, als Entladeöffnung zum Entladen des Behälters freizugeben.

Zumindest an einer Stirnseite, an welcher keine motorisch angetriebene Zugelementanordnung vorgesehen ist, ist vorteilhafterweise an dem Wickelvorgang eine an sich aus dem eingangs genannten Stand der Technik bekannte Spannbandanordnung eingesetzt. Dabei ist an der der aufgerollten Plane gegenüberliegenden Längsseite im Bereich der Stirnseite ein Spannband befestigt, welches mit seinem anderen Ende an der Welle befestigt ist und beim Abrollen der Plane auf die Welle oder eine mit dieser verbundene Rolle aufgewickelt wird. Bei einer rückläufigen Verlagerung der Welle wird das Spannband von der Rolle abgewickelt und versetzt damit die Welle in eine die Plane aufrollende Drehbewegung.

Besonders vorteilhaft ist die Weiterentwicklung der an sich bekannten Spannbandanordnung dahingehend, daß die kumulierte Länge der gleichzeitig abgewickelten Abschnitte von Spannband und Plane gegenüber einer Mindestlänge, die im wesentlichen gleich der Länge des abgewickelten Spannbands bei vollständig aufgewickelter Plane ist, entgegen einer Rückstellkraft verlängerbar ist. Hierdurch kann beispielsweise die Planenrolle auch über ein erhöhtes Ladegutprofil hinweg bewegt werden. Vorzugsweise steht das Gurtspannband in allen auftretenden Positionen unter einer Zugspannung, so daß immer eine straffe Aufwicklung von Plane bzw. Spannband gewährleistet ist. In der kürzesten kumulierten Länge steht dann das Spannband noch unter einer Vorspannung.

Die Vorgabe einer Vorspannung für die Rückstellkraft ist auch vorteilhaft für eine ständig straffe Aufwicklung der Plane auf die Planenwelle bzw. des Spannbands auf die Spannbandrolle, so daß in allen Positionen der Verlagerung der Planenwelle Plane und Spannband gespannt sind. Günstigerweise sind die Effekte eines überhöhten Ladeprofils und der kumulierten Längenänderung beim Wickelvorgang komplementär, so daß eine relativ geringe rückstellbare Längenreserve genügt.

Für beide Eigenschaften, Verlängerbarkeit und Zugspannung, können vorteilhafterweise federelastische Elemente eingesetzt werden, wobei diese beiden Eigenschaften vorzugsweise von ein und derselben Federelementanordnung bewirkt werden. Gemäß einer ersten vorteilhaften Ausführungsform kann das Spannband an sich ganz oder abschnittsweise federelastisch dehnbar aufgebaut sein nach Materialwahl und/oder Struktur. Eine andere Ausführung sieht ein Zugfederelement im Verlauf oder vorzugsweise an dem der Planenwelle abgewandten Ende des Spannbands vor. Besonders vorteilhaft ist eine Anordnung, bei welcher eine Wickelhülse für das Spannband koaxial zu der Planenwelle in deren Verlängerung angeordnet und mit deren Drehung derart gekoppelt, daß die Wickelhülse entgegen einer Federkraft relativ zu der Planenwelle verdrehbar ist, wobei auch in Positionen kürzester kumulierter Länge der abgewickelten Abschnitte von Plane und Spannband die Wickelhülse unter einer aufwickelnd gerichteten Vorspannung steht, welche sich durch relative Verdrehung von Wickelhülse und Planenwelle im Sinne einer Verlängerung der kumulierten Länge verstärkt. Als Federanordnung ist hierbei bevorzugt eine mit der Drehachse der Planenwelle koaxiale gewendelte Feder innerhalb der Wickelhülse und/oder der Planenwelle und/oder eines verbindenden Rohrabschnitts vorgesehen, deren eines Ende mit der Planenwelle und deren anderes Ende mit der Wickelhülse gedreht ist, und die nach unverspannter Montage durch relatives Verdrehen von Planenwelle und Wickelhülse eine Vorspannung erhält.

Die relative Verdrehung kann insbesondere durch Zug am Spannband und dessen Festlegung in vorgespanntem Zustand erfolgen.

Als Spannband kommt insbesondere ein textiles Gurtspannband in Betracht, es kann aber auch ein Federstahlband oder dgl. eingesetzt werden.

Die Zugelementanordnung kann in dem Verlauf zwischen den Längsseiten die Welle so erfassen, daß die Richtung der Zugkraft durch die Drehachse der Welle verläuft. Beispielsweise kann das Zugelement hierfür eine die Wellenachse umfassende Öse oder Schlinge aufweisen.

Besonders vorteilhaft ist die Einwirkung der Zugkraft der Zugelementanordnung auf die Welle in der Art, daß die Zugelementanordnung der Welle bei der Verlagerung eine zum Auf- bzw. Abrollen der Abdeckplane gleichsinnige Drehbewegung aufprägt. Die Richtung der Zugkraft der Zugelementanordnung verläuft hierzu gegen die Drehachse der Welle versetzt, und die Zugkraft bewirkt ein Drehmoment auf die Welle um deren Drehachse.

Als Zugelement kann beispielsweise ein in Längsrichtung unstrukturiertes Seil oder Band eingesetzt sein, welches einfach oder vorzugsweise mehrfach die Welle oder eine mit dieser drehfest verbundene Rolle umschlingt und durch Reibung die Welle dreht. Gemäß einer bevorzugten Ausführung ist das Zugelement in Längsrichtung regelmäßig strukturiert, beispielsweise in Form eines Zahnriemens oder einer Kette, und mit der Welle ist eine im Umfang strukturierte Scheibe, beispielsweise eine Zahnriemenscheibe oder ein Kettenrad drehfest verbunden. Das Zugelement und die Scheibe stehen ständig miteinander in Eingriff, so daß eine Längsbewegung des Zugelements eine Drehung der Welle unterstützt.

Das durch das Zugelement bewirkte Drehmoment und die damit aufgeprägte Drehung der Welle um deren Drehachse kann zum einen an der Stirnseite mit der Zugelementanordnung für die Aufwicklung der Abdeckplane die bekannte Spannbandanordnung ersetzen oder unterstützen und gewährleistet zum anderen vor allem ein zuverlässiges Rollen der Welle auch über ungleichmäßige Ladegutflächen beim Überdecken und beim Freilegen der Behälteröffnung.

Die Zugelementanordnung enthält vorzugsweise ein endloses Zugelement, welches im Bereich der Längsseiten umgelenkt ist und von einer Antriebseinrichtung bidirektional antreibbar ist. Es können aber auch für die Verlagerung der Welle in die entgegengesetzten Richtungen getrennte Zugelemente oder ein nicht endloses durchgehendes, mit seinen Enden festgelegtes Zugelement vorgesehen sein.

Die Länge der Zugelementanordnung im Verlauf zwischen den Längsseiten ist vorteilhafterweise gegenüber der bei geradem Verlauf zwischen den Langsseiten bzw. in deren Bereich angeordneten Umlenkelementen gegebenen Mindestlänge entgegen einer Rückstellkraft verlängerbar, so daß die Welle ohne weiteres über die Oberkante des Behälters ragendes Ladegut überwinden kann und das Zugelement immer gespannt und damit zuverlässig führbar ist. Das Zugelement kann hierfür in sich elastisch dehnbar sein und/oder in seinem Verlauf einen dehnbaren Abschnitt aufweisen. Bei dem bevorzugten Einsatz eines Zahnriemens, einer Kette oder dgl. ist vorzugsweise außerhalb des die Welle zwischen den Längsseiten erfassenden Zugelementverlaufs ein Abschnitt der Zugelementführung mit entgegen einer Rückstellkraft verkürzbarer Weglänge, insbesondere mit einer verschiebbaren Umlenkrolle vorgesehen.

Für den motorischen Antrieb sind vorteilhafterweise Einrichtungen zur Abschaltung in Abhängigkeit von der in dem Zugelement wirkenden Zugkraft vorgesehen. Die Überwachung der Zugkraft kann dabei mechanisch im Verlauf des Zugelements, insbesondere an einer Umlenkung des Zugelements erfolgen und über mechanische Mittel eine Abschaltung des Antriebs bei Überschreiten eines vorgebbaren Zugkraft-Schwellwerts bewirken.

Eine andere vorteilhafte Anordnung sieht vor, aus einer belastungsabhängigen Größe des Antriebsmotors, insbesondere dem Motorstrom eines Elektromotors oder dem Druck der Hydraulikflüssigkeit bei einem Hydraulikmotor, welche mit zunehmender Zugkraft im angetriebenen Zugelement ansteigt, eine Abschaltung des Antriebsmotors abzuleiten.

Die Abschaltung des motorischen Antriebs in Abhängigkeit von der Zugkraft im Zugelement kann vorteilhaft als Sicherheitsabschaltung wirken in dem Fall, daß beim Verlagern der Welle diese an der ordnungsgemäßen Weiterbewegung, insbesondere über eine unregelmäßige Ladegutoberfläche behindert ist, so daß eine Zerstörung oder Beschädigung der Anordnung durch zu hohe Zugkraft vermieden wird. Vorteilhafterweise kann die zugkraftabhängige Abschaltung des Antriebs auch als Endlagenabschaltung für die Verlagerung der Welle dienen, wodurch zum einen gesonderte Endlagenschalter entbehrlich sind und zum anderen durch die verbleibende Zugelementspannung eine sichere Festlegung der Welle in der jeweiligen Endlage gegeben ist.

Vorzugsweise sind Niederhalteeinrichtungen für die entlang der Stirnseiten zwischen gegenüberliegenden Längsseiten sich erstreckenden Kanten der abgerollten Abedeckplane vorgesehen, so daß insbesondere bei starker Luftströmung aufwirbelbares Ladegut auch bei zügiger Fahrt und/oder starkem Wind sicher abgedeckt ist. Gemäß einer bevorzugten Ausführungsform umfassen die Niederhalteeinrichtungen Klettverschlußeinrichtungen, welche mit einem Teil im Bereich der Oberkante der Behälterstirnseite und mit dem korrespondierendem anderen Teil entlang der Kante der Abdeckplane angeordnet sind. Der besondere Vorteil der Klettverschlußeinrichtungen ist in deren guter mechanischer Festigkeit, insbesondere gegen quer zur Klettfläche wirkende Zugkräfte und in dem einfachen Zusammenfügen ohne besondere Ausrichtung zu sehen.

Für die Erzielung des Eingriffs der Teile der Klettverschlußeinrichtungen können, insbesondere bei über die Behälteroberkanten hinausragendem Ladegut Niederhalteeinrichtungen wie aus dem Stand der Technik bekannt, beispielsweise Schwenkklappen oder elastische Saumbänder, unterstützend vorgesehen sein. Bei Abrollen der Abdeckplanenrolle auf der Oberkante der Behälterstirnseiten ist ein Klettverschlußeingriff bereits durch den Abrollvorgang zuverlässig gegeben. Eine auf der Oberkante der Stirnseite sich in Abrollrichtung erstreckende Erhebung über die Abrollfläche in Form einer Sicke, eines Stegs oder dgl. kann als Umwegdichtung wirken. Insbesondere bei zwischen den Längsseiten nach oben gewölbt verlaufender Oberkante liegt die Plane auch ohne Klettverschluß mit erhöhter Spannung auf einer solchen Erhebung auf, wodurch eine verbesserte Abdichtung erzielt wird.

Ein Lösen des Klettverschlusses erfolgt bei der Freilegung der Behälteröffnung mit dem Aufrollvorgang der Abdeckplane ohne größeren Kraftaufwand, da hierbei durch die Rollbewegung die zur Lösung eines Klettverschlusses optimale Abzugsrichtung senkrecht zur Klettfläche automatisch vorliegt. Die Niederhaltung der Abdeckplane ist daher auch unabhängig von der besonderen Art der Verlagerung der Welle vorteilhaft.

Eine weitere verschmutzungsunempfindliche Einrichtung zur Planenniederhaltung kann Dauermagnetelemente im Planensaum vorsehen, welche auch ohne Andruckkraft an der typischerweise weichmagnetisch metallischen Muldenoberkante haften. Eine Kombination mit der beschriebenen Klettverschlußeinrichtung ist besonders vorteilhaft.

Die Abdeckplane kann sowohl eine durchgehende Fläche ohne Unterbrechungen bilden, was insbesondere für feinkörniges oder sogenanntes schwebendes Ladegut von Bedeutung ist, als auch als Fläche mit Durchbrechungen oder auch als Netz ausgebildet sein. Die Abdeckplane kann beispielsweise als materialhomogene Folie, als Gewebebahn, als gewebeverstärkte Folie, als Netz unterschiedlicher Maschenweite, auch aus Metall usw. ausgeführt sein.

Die Erfindung ist nachfolgend anhand bevorzugter Ausführungsbeispiel unter Bezugnahme auf die Abbildungen noch eingehend veranschaulicht. Dabei zeigt
- Fig. 1:: einen Behälter in Seitenansicht
- Fig. 2:: eine Ansicht von der Frontseite

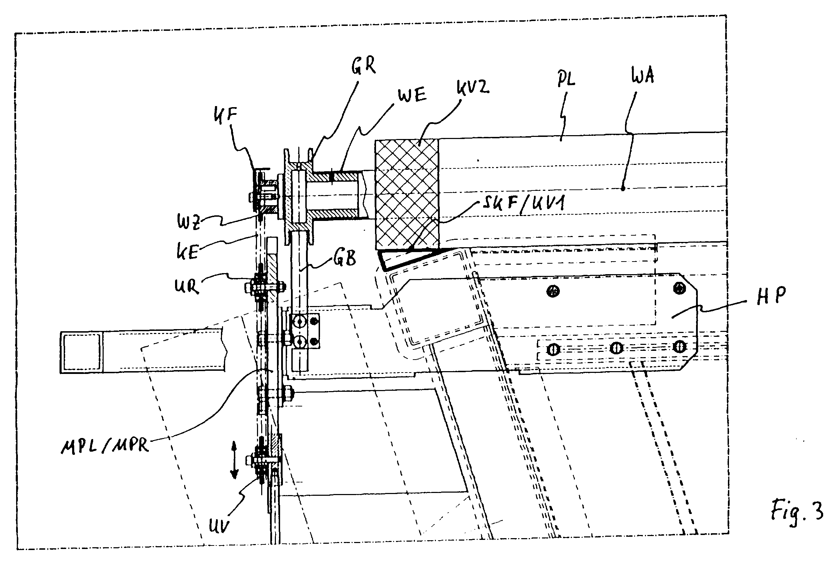

- Fig. 3:: eine Seitenansicht der Zugelementanordnung

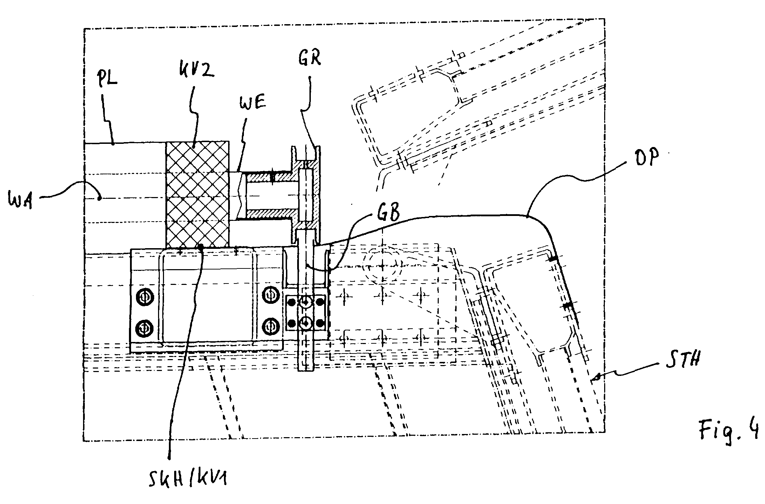

- Fig. 4:: eine Gurtspannbandanordnung am Behälterheck

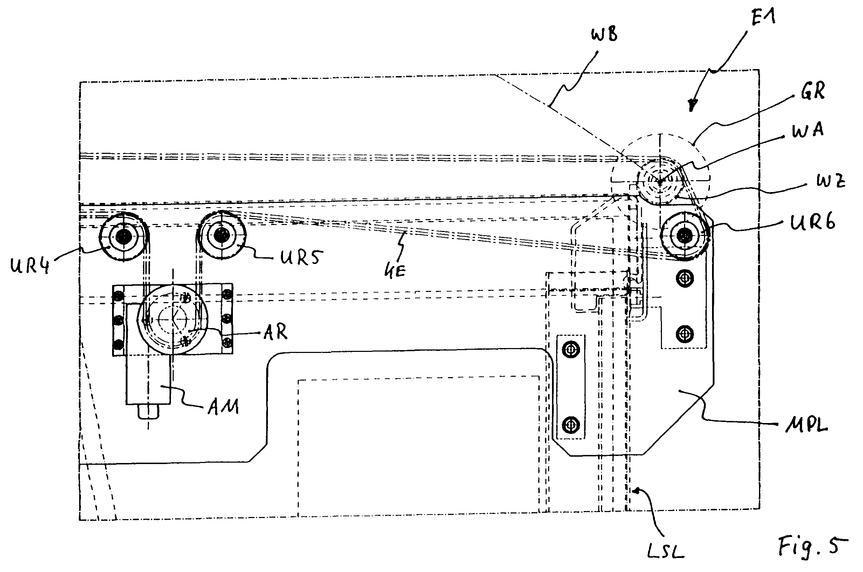

- Fig. 5:: einen Teil der Zugelementanordnung mit Motorantrieb

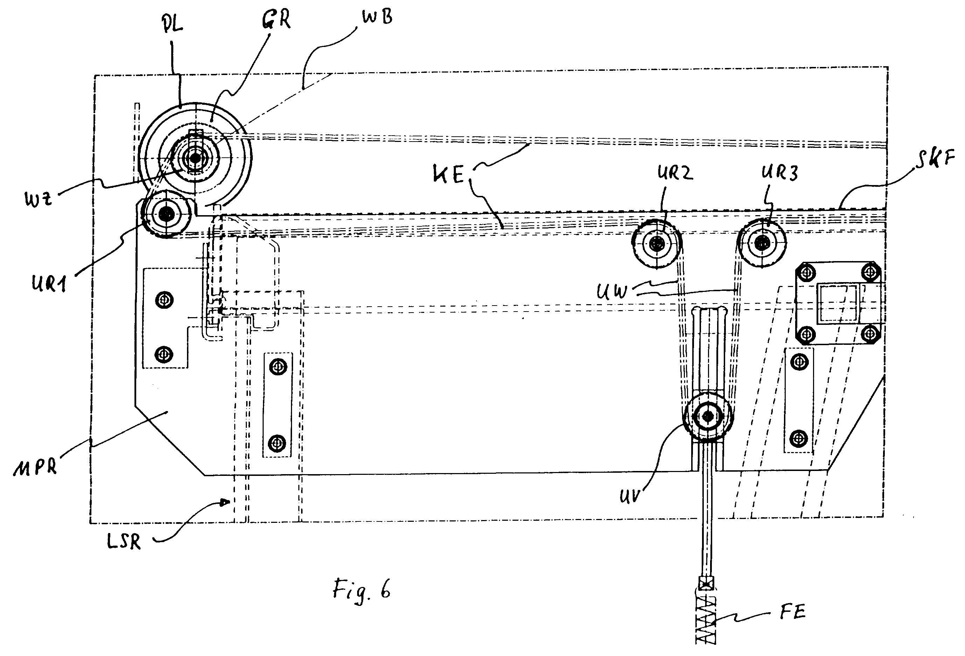

- Fig. 6:: einen Teil der Zugelementanordnung mit Kompensationsschlaufe
- Fig. 7:: einen Behälter mit Ladegut
- Fig. 8:: eine bevorzugte Spannbandeinrichtung

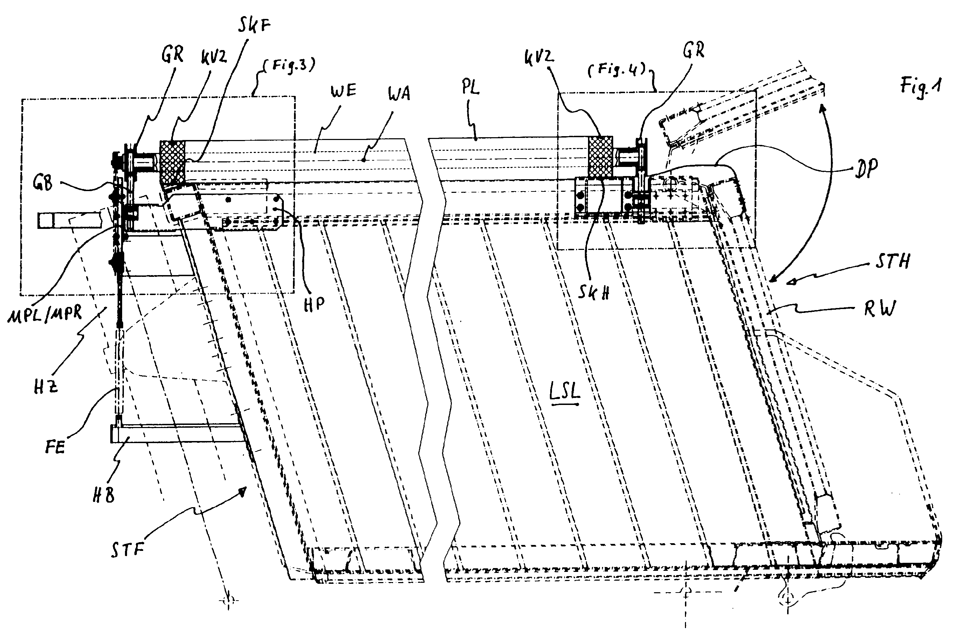

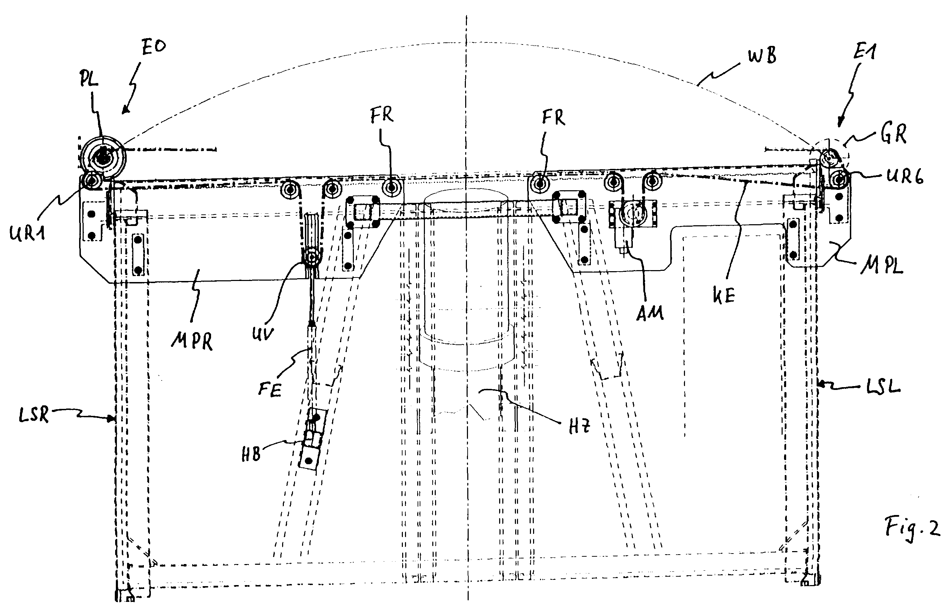

In der in Fig. 1 mit Blick auf die linke Seitenwand skizzierten Seitenansicht eines Behälters, der gemäß einem bevorzugten Anwendungsfall als Transportmulde eines Lastfahrzeugs ausgebildet ist, sind unter Aussparung eines Mittelabschnitts Frontpartie und Heckpartie des Behälters dargestellt. Die Frontpartie sei in üblicher Weise einem Fahrerstand des Lastfahrzeugs zugewandt und enthalte beispielsweise Hubmittel in Form eines Hydraulikzylinders HZ zur frontseitigen Anhebung des Behälters, welcher dann als Kippmulde ausgeführt ist mit einer ausklappbaren Rückwand RW am Behälterheck. Die Frontseite STF und die Heckseite STH des Behälters seien als Stirnseiten im Unterschied zu den Längsseiten LSL, LSR bezeichnet. Der Behälter ist nach oben offen und diese zur Beladung dienende Behälteröffnung ist durch die Plane verschließbar.

Über an dem Behälter durch Schweißen, Nieten, Schrauben etc. befestigte Halteplatten HP sind Montageplatten MPL, MPR in geringem Abstand von der frontseitigen Behälterwand angeordnet, die insbesondere Antrieb und Führungselemente der Zugelementanordnung tragen. An einer der Halteplatten ist ein Gurtspannband GB einseitig verankert, welches mit zur Abdeckplane PL entgegengesetztem Wicklungssinn auf eine mit der Welle WE, auf welche die Plane PL aufgewickelt ist, drehfest verbundene Gurtrolle GR als Wickelhülse aufwickelbar ist. Eine gleichartig aufgebaute Gurtspannband-Vorrichtung ist am heckseitigen Ende der Welle vorgesehen (rechts in Fig. 1).

Die Plane PL ist mit einer Längskante an einer Längsseite LSR des Behälters befestigt und bei freigelegter Behälteröffnung auf die sich parallel zur Behälterlängsseite erstreckende Welle WE aufgerollt, an welcher sie mit der anderen Planen-Längskante befestigt ist. Die aufgerollte Plane liegt vorzugsweise in einer Aufnahme bei der Befestigungslängsseite LSR.

Bei Verlagerung der Welle in Richtung der gegenüberliegenden Längsseite LSL des Behälters wird die Plane von der Welle abgerollt und die Welle dabei gedreht. Durch die feste Verbindung von Welle WE und Gurtrolle GR wird das an der gegenüberliegenden Längsseite LSL befestigte Gurtspannband GB gegensinnig zum Wickelsinn der Abdeckplane auf der Welle auf die Gurtrolle GR aufgerollt. Beim Zurückverlagern der Welle zur Freilegung der Behälteröffnung wird die Welle durch das Abwickeln des Gurtspannbands GB von der Gurtrolle GR im Gegensinn gedreht und dabei wird die Abdeckplane auf die Welle aufgerollt. Die gemeinsame Drehachse von Welle WE und Gurtrollen GR ist mit WA bezeichnet. Die Welle ist vorzugsweise als Rohr ausgeführt. Die feste Verbindung von Welle WE und Gurtrolle GR ist gemäß einer an späterer Stelle noch eingehend erläuterten Abänderung vorteilhaft ersetzbar durch eine entgegen einer Federkraft in beschränktem Umfang verdrehbare Verbindung.

Als Zugelement ist in dem skizzierten bevorzugten Beispiel eine Endloskette eingesetzt, welche in ein drehfest mit dem frontseitigen Ende der Welle koaxial verbundenes Zahnrad WZ eingreift. Der Durchmesser des Zahnrads liegt vorzugsweise in der Größenordnung des Wellendurchmessers. Die Endloskette ist durch einen Motor, insbesondere einen Elektromotor bidirektional antreibbar. Die Kette ist in ihrem Verlauf mehrfach an Umlenkrollen URi umgelenkt.

Durch den Eingriff der Kette KE in das mit der Welle WE verbundene Zahnrad wirkt die Zugkraft der Kette nicht nur translatorisch, sondern erzeugt auch ein Drehmoment um die Wellenachse, welches die Rollbewegung der Welle beim Abrollen oder Aufrollen der Abdeckplane unterstützt. Dieses Drehmoment ist insbesondere von Vorteil beim Überwinden von über die Oberkanten der die Behälteröffnung begrenzenden Stirnkanten und Längskanten hinausragendem Ladegut, indem auch steile Flanken der Ladegutoberfläche leichter überwunden werden. Der dauerhafte Eingriff der Kette KE in das Zahnrad WZ ist durch eine um die Wellenachse drehbare Kettenführungsplatte KF gewährleistet.

Im Bereich der Längsseiten LSL, LSR des Behälters sind auf Montageplatten MPR, MPL an der Front-Stirnseite STF des Behälters Umlenkrollen UR1, UR6 für die Kette KE angeordnet. Die Kette verläuft über die Umlenkrolle UR1, das Zahnrad WZ der Welle WE und die Umlenkrolle UR6 zwischen den Längsseiten LSR, LSL. Die Umlenkrollen sind in den Bereichen der Endlagen E0 bzw. E1 der Welle mit aufgerollter bzw. abgerollter Plane angeordnet.

Der Antrieb der Kette erfolgt wiederum über ein gezahntes Antriebsrad AR, welches vorzugsweise von einem bidirektional betreibbaren Antriebsmotor über einen selbsthemmenden Antrieb, beispielsweise einen Schneckenantrieb gedreht ist. Das Antriebsrad ist vorteilhafterweise in einer Schlaufe der Kettenführung zwischen Umlenkrollen UR4, UR5 von der Kette über wenigstens 90°, insbesondere ungefähr 180° umschlungen.

Insbesondere bei die Kanten der Behälteröffnung überragendem Ladegut ist die Länge der Kette im Weg zwischen Umlenkrollen UR1 und UR6 über das Zahnrad WZ der Welle WE während der Verlagerung der Welle nicht konstant und größer als die minimale Weglänge in den Endlagen der Welle. Um solche Längenvariationen bei ständig gespannter Kette zuzulassen, ist eine Kompensationsschlaufe UW der Kettenführung zwischen zwei Umlenkrollen UR2 und UR3 vorgesehen, in welcher die Kette um eine entgegen der Rückstellkraft einer Zugfeder FE verschiebbare weitere Umlenkrolle UV geführt ist. Die verschiebbare Rolle UV ist in einer Rollenführung RF geführt. Die vorzugsweise vorgespannte Zugfeder FE ist mit ihrem anderen Ende an einem Haltebügel HB eingehängt, der fest mit dem Behälter verbunden ist. In Fig. 2 ist die Planenwelle in beiden alternativen Endpositionen E0 und E1 zugleich skizziert.

Die die Behälteröffnung frontseitig und heckseitig begrenzenden Kanten zwischen den Längsseiten seien als Stirnkanten SKF frontseitig bzw. SKH heckseitig bezeichnet. Die Stirnkanten können gegen die Behälterwände in Längsrichtung versetzt sein. Die Stirnkanten sind parallel zueinander und vorzugsweise horizontal gerade. Gemäß anderer Ausführung können die Stirnkanten nach oben gewölbt verlaufen und dadurch bereits eine höhere Ladegutschüttung berücksichtigen. Die Plane überdeckt in Längsrichtung des Fahrzeugs noch beide Stirnkanten und rollt, soweit das Ladegut nicht über die zwischen den Stirnkanten aufgespannte Fläche hinausragt, auf den Stirnkanten ab. Vorteilhafterweise sind die Stirnkanten mit einem ersten KV1 und die darauf abrollenden Randabschnitte der Planen-Querkanten mit dem korrespondierenden anderen Teil KV2 einer Klettverschlußvorrichtung versehen, so daß sich beim Abrollen der Plane unter dem Einfluß der Andruckkraft der Plane unter dem Gewicht der Welle und ggf. darauf noch aufgewickelter Plane eine zuverlässige Klettverschlußverbindung ergibt, welche insbesondere gegen seitliche Zugkräfte stabil ist. Beim Aufrollen der Plane wirken durch die Rollbewegung die abziehenden Kräfte senkrecht zur Klettverbindungsfläche und ermöglichen eine zerstörungsfreie Lösung der Klettverbindung. Die Planenwelle kann bei der Rollbewegung über die Behälterstirnkanten in Längsrichtung des Fahrzeugs geführt sein, beispielsweise durch Eingriff eines Stegs auf der Stirnkante in eine Ringnut einer mit der Planenwelle verbundenen Rolle, insbesondere auch der Gurtspannrolle, oder durch einen an den Stirnkanten außen entlanglaufenden Kragen der Gurtrolle usw.

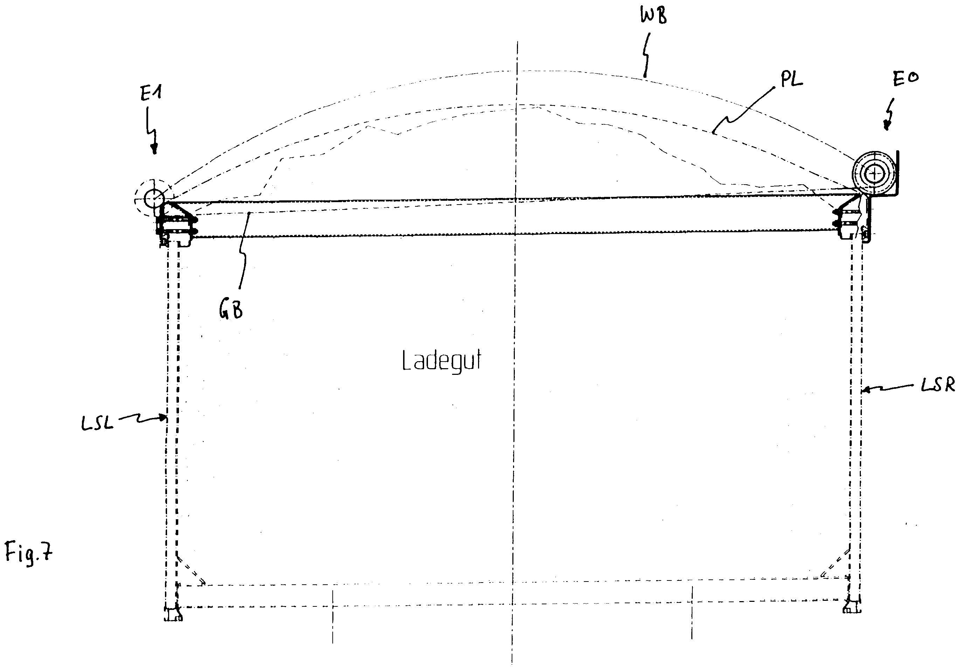

Bei über die zwischen den Stirnkanten SKF, SKH aufgespannte Fläche hinausragendem Ladegut, wie in Fig. 7 skizziert, rollen die Planenränder nicht mehr auf den Stirnkanten ab, so daß für die Niederhaltung der Abdeckplane die Klettverbindung von Hand oder durch zusätzliche Hilfsmittel, wie beispielsweise die aus dem eingangs genannten Stand der Technik bekannte schwenkbare Platte und/oder ein elastisches Band im Planensaum herbeigeführt werden kann. Die maximale Bahnwölbung der Wellenachse bei der Verlagerung ist durch eine mit WB gekennzeichnete unterbrochene Linie angegeben. Die Stirnkanten SKF, SKH können auch nach oben gewölbt sein und dadurch bereits ein in der Mitte höheres Ladegutprofil berücksichtigen.

Die Klettverschlußeinrichtung ist auch unabhängig vom Mechanismus der Wellenverlagerung vorteilhaft. Durch einen Wulst, ein Sicke oder dgl. auf den Stirnkanten kann u. U. eine verbesserte Abdichtung der Plane entlang der Auflageflächen der Stirnkanten erreicht werden.

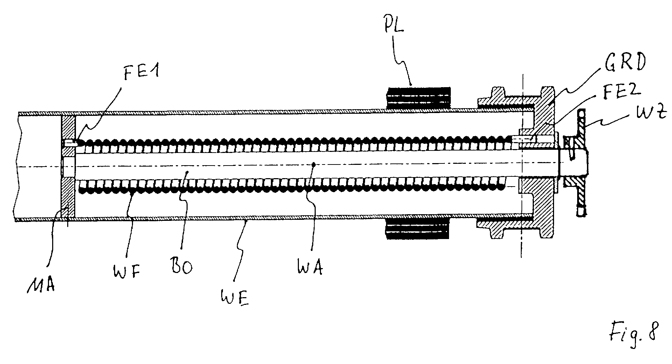

Die Fig. 8 zeigt eine bevorzugte Ausführung einer Spannbandanordnung. Am Ende der Planenwelle WE ist die Gurtrolle GRD koaxial zur Welle WE und relativ zu dieser um die gemeinsame Achse verdrehbar. Die Welle WE ist zumindest abschnittsweise als Rohr ausgeführt, in welches verdrehsicher eine Mitnehmeranordnung MA, z. B. in Form einer Scheibe eines Stegs etc. von Wellenende beabstandet eingesetzt ist. Eine gewendelte Feder WF ist innerhalb des Rohrabschnitts zwischen Mitnehmeranordnung und Gurtrolle GRD um einen koaxialen Haltebolzen BO angeordnet und mit ihrem einen Ende FE1 in der Mitnehmeranordnung und mit ihrem anderen Ende FE2 in der Gurtrolle GRD eingehängt. Mittels des Haltebolzens BO kann die Lageranordnung GL für die verdrehbare Gurtrolle GR achsial gesichert werden. Auf dem freien Ende des drehfest mit der Welle WE verbundenen Bolzens BO kann das Zahnrad WZ befestigt werden.

Die Feder WF wird anfangs nach der unverspannten Montage durch Verdrehen der Gurtrolle GR relativ zur Welle WE in der Weise vorgespannt, daß die Federspannung das Gurtband strafft. Wird bei der Verlagerung der Planenwelle zwischen den Längsseiten des Behälters die Gurtrolle weiter verdreht, so nimmt die Federspannung zu und gewährleistet bei nachlassendem Gurtbandzug ein straffes Aufwickeln des Gurtbands auf die Gurtrolle bzw. der Plane auf die Planenwelle.

Die Verdrehbarkeit der Gurtrolle relativ zur Welle kann dabei je nach Einsatzfall durchaus auch mehrere Umdrehungen umfassen. Die Federspannkraft kann durch Parameter der Feder und die anfänglich eingestellte Vorspannung beeinflußt werden.

Bei dem Beispiel mit schwenkbarer Rückwand des Behälters kann zur weiteren Abdeckung des Behälterraums im Bereich des Schwenklagers ein separater Streifen einer flexiblen Dichtplane DP vorgesehen sein.

Die vorstehend und in den Ansprüchen angegebenen Merkmale sind sowohl einzeln als auch in verschiedenen Kombinationen vorteilhaft realisierbar.

Die Erfindung ist nicht auf die beschriebenen Ausführungsbeispiele beschränkt, sondern im Rahmen fachmännischen Könnens in mancherlei Weise abwandelbar. Insbesondere ergeben sich große Variationsmöglichkeiten in der Zugelementführung mit einem endlosen oder nicht endlosen oder geteiltem Zugelement.

## Patentansprüche

1. Vorrichtung zur Abdeckung eines Behälters, insbesondere eines Fahrzeug-Muldenbehälters, durch eine Abdeckplane, welche durch Verlagern einer Welle zwischen gegenüberliegenden Längsseiten des nach oben offenen Behälters von der Welle abrollbar bzw. auf diese aufrollbar ist, dadurch gekennzeichnet, daß die Verlagerung der Welle unter der Zugkraft einer Zugelementanordnung erfolgt, welche an einer Stirnseite des Behälters zwischen den Längsseiten verläuft und in diesem Verlauf die Welle erfaßt und bidirektional motorisch antreibbar ist.

2. Vorrichtung nach Anspruch 1, dadurch gekennzeichnet, daß die Zugelementanordnung der Welle bei der Verlagerung eine zum Auf- bzw. Abrollen der Abdeckplane gleichsinnige Drehbewegung aufprägt.

3. Vorrichtung nach Anspruch 1 oder 2, dadurch gekennzeichnet, daß die Zugelementanordnung ein durchgehendes Zugelement enthält.

4. Vorrichtung nach einem der Ansprüche 1 bis 3, dadurch gekennzeichnet, daß die Zugelementanordnung ein endloses Zugelement enthält.

5. Vorrichtung nach einem der Ansprüche 1 bis 4, dadurch gekennzeichnet, daß die Länge der Zugelementanordnung im Verlauf zwischen den Längsseiten gegenüber eine Mindestlänge entgegen einer Rückstellkraft verlängerbar ist.

6. Vorrichtung nach einem der Ansprüche 1 bis 5, gekennzeichnet durch eine entgegen einer Rückstellkraft verkürzbare Wegführung der Zugelementanordnung außerhalb des Verlaufs zwischen den Längsseiten.

7. Vorrichtung nach Anspruch 6, dadurch gekennzeichnet, daß die verkürzbare Wegführung eine entgegen einer Rückstellkraft verschiebbare Umlenkrolle umfaßt.

8. Vorrichtung nach einem der Ansprüche 1 bis 7, gekennzeichnet durch Umlenkrollen im Bereich der Längsseiten.

9. Vorrichtung nach einem der Ansprüche 1 bis 9, gekennzeichnet durch Überwachungseinrichtungen zur Abschaltung des motorischen Antriebs in Abhängigkeit von der in der Zugelementanordnung wirkenden Zugkraft.

10. Vorrichtung nach Anspruch 9, dadurch gekennzeichnet, daß die Überwachungseinrichtungen den Motorstrom eines elektromotorischen Antriebs oder den Druck der Hydraulikflüssigkeit eines Hydraulikmotors überwachen und bei Überschreiten eines vorgebbaren Schwellwerts den Antrieb abschalten.

11. Vorrichtung nach Anspruch 9, dadurch gekennzeichnet, daß die Überwachungseinrichtungen die Zugkraft in der Zugelementanordnung mechanisch überwachen.

12. Vorrichtung nach einem der Ansprüche 9 bis 11, dadurch gekennzeichnet, daß eine Abschaltung des Antriebs in den Endlagen der Welle nach Maßgabe der Überwachungseinrichtungen erfolgt.

13. Vorrichtung nach Anspruch 12, dadurch gekennzeichnet, daß die Welle in den Endlagen unter Zugspannung der Zugelementanordnung gehalten ist.

14. Vorrichtung nach einem der Ansprüche 1 bis 13, dadurch gekennzeichnet, daß die Zugelementanordnung ein längsstrukturiertes Zugelement, insbesondere eine Kette oder einen Zahnriemen enthält, welches in Eingriff mit einer mit der Welle mitgedrehten Scheibe, insbesondere einem Kettenrad oder einer Zahnriemenscheibe steht.

15. Vorrichtung nach einem der Ansprüche 1 bis 13, dadurch gekennzeichnet, daß die Zugelementanordnung ein Seil umfaßt, welches die Welle oder eine mit dieser mitgedrehte Rolle einfach oder vorzugsweise mehrfach umschlingt.

16. Vorrichtung nach einem der Ansprüche 1 bis 15, dadurch gekennzeichnet, daß eine motorisch angetriebene Zugelementanordnung nur an einer ersten Stirnseite des Behälters vorgesehen ist.

17. Vorrichtung nach Anspruch 16, gekennzeichnet durch eine Spannbandanordnung an der zweiten oder beiden Stirnseiten des Behälters.

18. Vorrichtung nach Anspruch 17, dadurch gekennzeichnet, daß eine koaxial zur Planenwelle angeordnete Spannbandrolle entgegen einer Rückstellkraft um ein begrenztes Maß gegen die Welle verdrehbar ist.

19. Vorrichtung nach Anspruch 18, dadurch gekennzeichnet, daß das Spannband in jeder Position der Wellenverlagerung unter Einwirkung einer Federspannung gespannt ist.

20. Vorrichtung nach einem der Ansprüche 1 bis 19, gekennzeichnet durch eine Niederhalteeinrichtung für die abgerollte Abdeckplane an wenigstens einer Stirnseite.

21. Vorrichtung nach Anspruch 20, gekennzeichnet durch eine Klettverschlußeinrichtung als Niederhalteeinrichtung.
